(19) Europäisches Patentamt / European Patent Office / Office européen des brevets

(11) **EP 4 143 825 B1**

(12) **EUROPEAN PATENT SPECIFICATION**

(45) Date of publication and mention
of the grant of the patent:
**13.08.2025 Bulletin 2025/33**

(21) Application number: **21720793.5**

(22) Date of filing: **29.04.2021**

(51) International Patent Classification (IPC):
**G06N 3/045** (2023.01)     **G06N 3/08** (2023.01)
**G10L 19/008** (2013.01)     **G10L 21/02** (2013.01)

(52) Cooperative Patent Classification (CPC):
**G10L 21/02; G06N 3/045; G06N 3/08;** G10L 19/008

(86) International application number:
**PCT/EP2021/061283**

(87) International publication number:
**WO 2021/219798 (04.11.2021 Gazette 2021/44)**

(54) **METHOD, APPARATUS AND SYSTEM FOR ENHANCING MULTI-CHANNEL AUDIO IN A DYNAMIC RANGE REDUCED DOMAIN**

VERFAHREN, VORRICHTUNG UND SYSTEM ZUR VERBESSERUNG VON MEHRKANALAUDIO IN EINER DOMÄNE MIT REDUZIERTEM DYNAMIKBEREICH

PROCÉDÉ, APPAREIL ET SYSTÈME POUR AMÉLIORER L'AUDIO MULTICANAL DANS UN DOMAINE À PLAGE DYNAMIQUE RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2020 US 202063018282 P**
**20.05.2020 EP 20175654**

(43) Date of publication of application:
**08.03.2023 Bulletin 2023/10**

(73) Proprietor: **Dolby International AB**
**Dublin, D02 VK60 (IE)**

(72) Inventor: **BISWAS, Arijit**
**90429 Nuremberg (DE)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
• **ARIJIT BISWAS ET AL: "Audio Codec Enhancement with Generative Adversarial Networks", ARXIV.ORG, CORNELL UNIVERSITY LIBRARY, 201 OLIN LIBRARY CORNELL UNIVERSITY ITHACA, NY 14853, 27 January 2020 (2020-01-27), pages 1 - 5, XP081586255**
• **ARIJIT BISWAS ET AL: "Temporal Noise Shaping with Companding", INTERSPEECH 2018, 1 January 2018 (2018-01-01), ISCA, pages 3548 - 3552, XP055647200, DOI: 10.21437/ Interspeech.2018-2096**

**Description**

CROSS-REFERENCE TO RELATED APPLICATION

This application claims priority of the following priority application: US provisional application 63/018,282 (reference: D20011USP1), filed 30 April 2020, and European application 20175654.1 (reference: D20011EP), filed 20 May 2020.

TECHNOLOGY

The present disclosure relates generally to a method of generating, in a dynamic range reduced domain, an enhanced multi-channel audio signal from an audio bitstream including a multi-channel audio signal, and more specifically to jointly enhancing the two or more channels of the dynamic range reduced raw multi-channel audio signal using a multi-channel Generator of a Generative Adversarial Network setting.

While some embodiments will be described herein with particular reference to that disclosure, it will be appreciated that the present disclosure is not limited to such a field of use and is applicable in broader contexts.

BACKGROUND

Any discussion of the background art throughout the disclosure should in no way be considered as an admission that such art is widely known or forms part of common general knowledge in the field.

Audio recording systems are used to encode an audio signal into an encoded signal that is suitable for transmission or storage, and then subsequently receive or retrieve and decode the coded signal to obtain a version of the original audio signal for playback. Low-bitrate audio coding is a perceptual audio compression technology which allows to reduce bandwidth and storage requirements. Examples of perceptual audio coding systems include AC-3, Advanced Audio Coding (AAC), and the more recently standardized AC-4 audio coding system, standardized by ETSI and included in ATSC 3.0.

However, low-bitrate audio coding introduces unavoidable coding artifacts. Audio coded at low bitrates may suffer especially from details in the audio signal and the quality of the audio signal may be degraded due to the noise introduced by quantization and coding.

Up to now, several approaches have been developed to enhance the quality of low-bitrate coded single-channel and multi-channel audio. Multi-channel approaches include, for example, beam-forming and multi-channel Wiener filter. Due to the use of spatial information, multi-channel approaches may generally perform better than single-channel approaches.

C. Uhle et al. review in their publication on "Methods for Low Bitrate Coding Enhancement Part II: Spatial Enhancement", AES International Conference on Automotive Audio, 2017, perceptual coding technologies and discuss the nature and origin of common spatial coding artifacts. Further, a suite of dedicated algorithms is proposed each designed for mitigating a common type of artifact. From this suite, an LBCE (low bitrate coding enhancement) engine can be built which individually adapts to the underlying encoder configurations of the coded audio material.

Companding is a coding tool in the AC-4 coding system, which improves perceptual coding of speech and dense transient events (e.g. applause). Benefits of companding include reducing short-time dynamics of an input signal to thus reduce bit rate demands at the encoder side, while at the same time ensuring proper temporal noise shaping at the decoder side.

During the last years, deep learning approaches have become more and more attractive in various fields of application including speech enhancement. In this context, D. Michelsanti and Z.-H. Tan describe in their publication on "Conditional Generative Adversarial Networks for Speech Enhancement and Noise-Robust Speaker Verification", published in INTERSPEECH 2017, that the conditional Generative Adversarial Network (GAN) method outperforms the classical short-time spectral amplitude minimum mean square error speech enhancement algorithm and is comparable to a deep neural network-based approach to speech enhancement.

N. Tawara, T. Kobayashi, and T. Ogawa further describe in their publication on "Multi-channel Speech Enhancement Using Time-Domain Convolutional Denoising Autoencoder", published in INTERSPEECH 2019, a multi-channel time-domain convolutional denoising autoencoder (TCDAE) and evaluate its speech enhancement performance in a multi-channel configuration. The TCDAE directly maps noisy speech signals into clean signal in the time-domain, aiming to learn spatial information in an end-to-end manner.

A. Biswas et al., "Audio Codec Enhancement with Generative Adversarial Networks", describes a GAN-based coded audio enhancer for effectively restoring signals contaminated with coding noise. The method directly operates on decoded waveforms, and thus the concept is codec-agnostic.

In general, recent work is based mostly on deep convolutional GANs. While GANs are increasingly used also in speech and audio-related applications, the application to multi-channel audio is, however, still scarce. Moreover, most of the deep learning approaches up to now relate to speech denoising. It is to be noted that the restoration of audio from coding noise is a challenging problem. Intuitively one may consider coding artifact reduction and de-noising to be highly related. However, removal of coding artifacts/noise that are highly correlated to the desired sounds appears to be more complicated than removing other noise types (in de-noising application) that are often less correlated. The characteristics of coding artifacts depend on the codec and the employed coding tools, and the selected bitrate.

It would thus be desirable to combine the benefits of a Generator trained in a GAN setting with the benefits of companding techniques to significantly reduce coding artifacts in multi-channel audio signals to provide a user with the benefits of quality enhanced audio.

## SUMMARY

In accordance with a first aspect of the present disclosure there is provided a method of generating, in a dynamic range reduced domain, an enhanced multi-channel audio signal from an audio bitstream including a multi-channel audio signal according to claim 1.

Configured as above, the method enables to improve the quality of a multi-channel audio signal in a reduced dynamic range domain using a multi-channel Generator trained in a Generative Adversarial Network setting. In this, joint restoration of coded audio and spatial enhancement can be performed.

In some embodiments, the method may further include, after core decoding the audio bitstream, performing a dynamic range reduction operation to obtain the dynamic range reduced raw multi-channel audio signal.

In some embodiments, the audio bitstream may be in AC-4 format.

In some embodiments, the method may further include a step of expanding the enhanced dynamic range reduced multi-channel audio signal to an expanded dynamic range domain by performing an expansion operation on the two or more channels.

In some embodiments, the expansion operation may be a companding operation based on a p-norm of spectral magnitudes for calculating respective gain values.

In some embodiments, the received audio bitstream may include metadata and receiving the audio bitstream may further include demultiplexing the received audio bitstream.

In some embodiments, jointly enhancing the two or more channels of the dynamic range reduced raw multi-channel audio signal by the multi-channel Generator may be based on the metadata.

In some embodiments, the metadata may include one or more items of companding control data.

In some embodiments, the companding control data may include information on a companding mode among one or more companding modes that had been used for encoding the multi-channel audio signal. In some embodiments, the companding modes may include the companding mode of companding on, the companding mode of companding off and the companding mode of average companding.

In some embodiments, jointly enhancing the two or more channels of the dynamic range reduced raw multi-channel audio signal by the multi-channel Generator may depend on the companding mode indicated by the companding control data.

In some embodiments, if the companding mode is companding off, joint enhancing by the multi-channel Generator may not be performed.

The multi-channel Generator is a Generator trained in the dynamic range reduced domain in a Generative Adversarial Network setting.

In some embodiments, the multi-channel Generator may include an encoder stage and a decoder stage arranged in a mirror symmetric manner, wherein the encoder stage and the decoder stage each may include L layers with N filters in each layer, wherein L may be a natural number $\geq 1$ and wherein N may be a natural number $\geq 1$, and wherein the size of the N filters in each layer of the encoder stage and the decoder stage may be the same and each of the N filters in the encoder stage and the decoder stage may operate with a stride of > 1.

In some embodiments, in at least one layer of the encoder stage and at least one layer of the decoder stage a non-linear operation may be performed including one or more of ReLU, PReLU, LReLU, eLU and SeLU.

In some embodiments, the multi-channel Generator may further include a non-strided (meaning stride = 1) convolutional layer as an input layer prepending the encoder stage.

In some embodiments, the multi-channel Generator may further include a non-strided (meaning stride = 1) transposed convolutional layer as an output layer subsequently following the decoder stage.

In some embodiments, one or more skip connections may exist between respective homologous layers of the multi-channel Generator.

In some embodiments, the multi-channel Generator may include, between the encoder stage and the decoder stage, a stage for modifying multi-channel audio in the dynamic range reduced domain based at least on a dynamic range reduced coded multi-channel audio feature space.

In some embodiments, a random noise vector z may be used in the dynamic range reduced coded multi-channel audio feature space for modifying multi-channel audio in the dynamic range reduced domain.

In some embodiments, the use of the random noise vector z may be conditioned on a bit rate of the audio bitstream and/or on a number of channels of the multi-channel audio signal.

In some embodiments, the method may further include the following steps to be performed before receiving the audio bitstream: inputting a dynamic range reduced raw multi-channel audio training signal into the multi-channel Generator, wherein the dynamic range reduced raw multi-channel audio training signal comprises two or more channels; jointly generating, by the multi-channel Generator, the enhanced dynamic range reduced multi-channel audio training signal based on the dynamic range reduced raw multi-channel audio training signal; inputting, one at a time, each channel of the two or more channels of the enhanced dynamic range reduced multi-channel audio training signal and a corresponding channel of an original dynamic range reduced multi-channel audio signal, from which the dynamic range reduced raw multi-channel audio training signal has been derived, into a single-channel Discriminator out of a group of one or more single-channel Discriminators; inputting further, one at a time, the enhanced dynamic range reduced multi-channel audio training signal and the corresponding original dynamic range reduced multi-channel audio signal into a multi-channel Discriminator; judging by the single-channel Discriminator and the multi-channel Discriminator whether the input dynamic range reduced multi-channel audio signal is the enhanced dynamic range reduced multi-channel audio training signal or the original dynamic range reduced multi-channel audio signal; and tuning the parameters of the multi-channel Generator until the single-channel Discriminator and the multi-channel Discriminator can no longer distinguish the enhanced dynamic range reduced multi-channel audio training signal from the original dynamic range reduced multi-channel audio signal.

In some embodiments, the group of the one or more single-channel Discriminators may be chosen based on a type of the original dynamic range reduced multi-channel audio signal, wherein the type of the original dynamic range reduced multi-channel audio signal may include a stereo type multi-channel audio signal, a 5.1 type multi-channel audio signal, a 7.1 type multi-channel audio signal or a 9.1 type multi-channel audio signal.

In some embodiments, additionally a random noise vector z may be input into the multi-channel Generator and jointly generating, by the multi-channel Generator, the enhanced dynamic range reduced multi-channel audio training signal may additionally be based on the random noise vector z.

In some embodiments, additional metadata may be input into the multi-channel Generator and jointly generating, by the multi-channel Generator, the enhanced dynamic range reduced multi-channel audio training signal may additionally be based on the metadata.

In some embodiments, the metadata may include one or more items of companding control data.

In some embodiments, the companding control data may include information on a companding mode among one or more companding modes used for encoding the original multi-channel audio signal.

In some embodiments, the companding modes may include the companding mode of companding on, the companding mode of companding off and the companding mode of average companding.

In some embodiments, jointly generating, by the multi-channel Generator, the enhanced dynamic range reduced multi-channel audio training signal may depend on the companding mode indicated by the companding control data.

In some embodiments, if the companding mode is companding off, joint enhancing by the multi-channel Generator may not be performed.

In accordance with a second aspect of the present disclosure there is provided a method for training a multi-channel Generator according to claim 11.

In some embodiments, the group of the one or more single-channel Discriminators may be chosen based on a type of the original dynamic range reduced multi-channel audio signal, wherein the type of the original dynamic range reduced multi-channel audio signal may include a stereo type multi-channel audio signal, a 5.1 type multi-channel audio signal, a 7.1 type multi-channel audio signal or a 9.1 type multi-channel audio signal.

In some embodiments, additionally a random noise vector z may be input into the multi-channel Generator and jointly generating, by the multi-channel Generator, the enhanced dynamic range reduced multi-channel audio training signal may additionally be based on the random noise vector z.

In some embodiments, additional metadata may be input into the multi-channel Generator and jointly generating, by the multi-channel Generator, the enhanced dynamic range reduced multi-channel audio training signal may additionally be based on the metadata.

In some embodiments, the metadata may include one or more items of companding control data.

In some embodiments, the companding control data may include information on a companding mode among one or more companding modes used for encoding the original multi-channel audio signal.

In some embodiments, the companding modes may include the companding mode of companding on, the companding mode of companding off and the companding mode of average companding.

In some embodiments, jointly generating, by the multi-channel Generator, the enhanced dynamic range reduced multi-channel audio training signal may depend on the companding mode indicated by the companding control data.

In some embodiments, if the companding mode is companding off, joint enhancing by the multi-channel Generator may not be performed.

In accordance with a third aspect of the present disclosure there is provided an apparatus according to claim 14.

In some embodiments, the apparatus may further include a demultiplexer for demultiplexing the received audio bitstream, wherein the received audio bitstream may include metadata.

In some embodiments, the metadata may include one or more items of companding control data.

In some embodiments, the companding control data may include information on a companding mode among one or more companding modes that had been used for encoding the multi-channel audio signal. In some embodiments, the companding modes may include the companding mode of companding on, the companding mode of companding off and the companding mode of average companding.

In some embodiments, the multi-channel Generator may be configured to jointly enhance the two or more channels of the dynamic range reduced raw multi-channel audio signal in the dynamic range reduced domain depending on the companding mode indicated by the companding control data.

In some embodiments, if the companding mode is companding off, the multi-channel Generator may be configured not to perform joint enhancing.

In some embodiments, the apparatus may further include an expansion unit configured to perform an expansion operation on the two or more channels to expand the enhanced dynamic range reduced multi-channel audio signal to an expanded dynamic range domain.

In some embodiments, the apparatus may further include a dynamic range reduction unit configured to perform a dynamic range reduction operation after core decoding the audio bitstream to obtain the dynamic range reduced raw multi-channel audio signal.

BRIEF DESCRIPTION OF THE DRAWINGS

Example embodiments of the disclosure will now be described, by way of example only, with reference to the accompanying drawings in which:

FIG. 1 illustrates a flow diagram of an example of a method of generating, in a dynamic range reduced domain, an enhanced multi-channel audio signal from an audio bitstream including a multi-channel audio signal.

FIG. 2 illustrates an example of a Generative Adversarial Network setting comprising a multi-channel Discriminator for training a multi-channel Generator in a reduced dynamic range domain.

FIG. 3 illustrates an example of a Generative Adversarial Network setting comprising a single-channel Discriminator for training a multi-channel Generator in a reduced dynamic range domain.

FIG. 4 illustrates an example of a Generative Adversarial Network setting for training a multi-channel Discriminator in a reduced dynamic range domain.

FIG. 5 illustrates a further example of a Generative Adversarial Network setting for training a multi-channel Discriminator in a reduced dynamic range domain.

FIG. 6 illustrates an example of a Generative Adversarial Network setting for training a single-channel Discriminator in a reduced dynamic range domain.

FIG. 7 illustrates a further example of a Generative Adversarial Network setting for training a single-channel Discriminator in a reduced dynamic range domain.

FIG. 8 illustrates an example of a multi-channel Generator architecture.

DESCRIPTION OF EXAMPLE EMBODIMENTS

*Companding*

Companding techniques, as described in US Patent US 9,947,335 B2, which is incorporated herein by reference in its entirety, achieve temporal noise shaping of quantization noise in an audio codec through use of a companding algorithm implemented in the QMF (quadrature mirror filter) domain to achieve temporal shaping of quantization noise. In general, companding is a parametric coding tool that operates in the QMF domain that may be used for controlling the temporal distribution of quantization noise (e.g., quantization noise introduced in the MDCT (modified discrete cosine transform) domain). As such, companding techniques may involve a QMF analysis step, followed by application of the actual companding operation/algorithm, and a QMF synthesis step.

Companding may be seen as an example technique that reduces the dynamic range of a signal, and equivalently, that removes a temporal envelope from the signal. Methods, apparatus and systems described herein aim at improving the quality of a multi-channel audio signal in a reduced dynamic range domain. Such improvements may thus be in particular valuable for application with companding techniques. Some embodiments thus relate to companding and, in particular, to improving the quality of the multi-channel audio signal in the QMF domain as the dynamic range reduced domain.

*Overview*

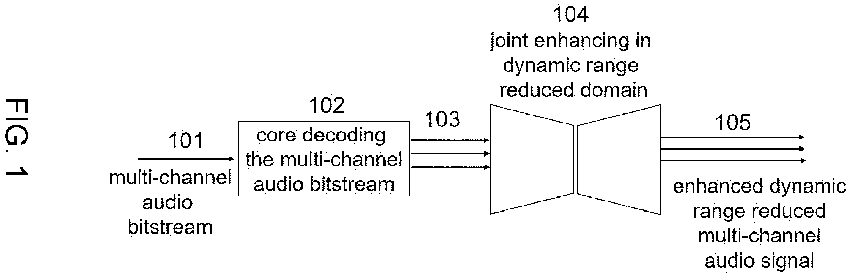

Referring to the example of Figure 1, a method of generating, in a dynamic range reduced domain, an enhanced multi-channel audio signal from an audio bitstream including a multi-channel audio signal is illustrated. In a first step, 101, an audio bitstream including a multi-channel audio signal is received. The codec of the audio bitstream is not limited and may be any codec used in lossy audio compression, for example AAC (Advanced Audio Coding), AC-3, HE-AAC, USAC or AC-4. In an embodiment, the audio bitstream may be in AC-4 format. In a second step, 102, the audio bitstream is core decoded and a dynamic range reduced raw multi-channel audio signal is obtained based on the received audio bitstream, wherein the dynamic range reduced raw multi-channel audio signal comprises two or more channels. For example, the audio bitstream may be core decoded to obtain a dynamic range reduced raw multi-channel audio signal comprising two or more channels based on the audio bitstream including the multi-channel audio signal. The term core decoded, as used herein, generally refers to decoded audio after waveform coding in the MDCT-domain. In AC-4, the core codec is known as Audio Spectral Frontend (ASF) or Speech Spectral Frontend (ASF).

Further, the term raw in relation to the dynamic range reduced multi-channel audio signal, as used herein, refers to the dynamic range reduced multi-channel audio signal prior to the joint enhancement by a multi-channel Generator (in the following also simply denoted as Generator) described further below, i.e. the non-enhanced dynamic range reduced multi-channel audio signal.

A dynamic range reduced multi-channel audio signal may be encoded in the audio bitstream. Alternatively, dynamic range reduction may be performed prior to or after core decoding the audio bitstream. In an embodiment, step 102 may thus further include performing a dynamic range reduction operation, for example companding, after core decoding the audio bitstream.

The dynamic range reduced raw multi-channel audio signal is input into the multi-channel Generator for jointly processing the dynamic range reduced raw multi-channel audio signal in step 103. The term jointly, as used herein, refers to an operation, for example, processing/enhancing, which is performed simultaneously on the two or more channels of the multi-channel audio signal. In this case, jointly refers to the simultaneous enhancement of the two or more channels of the dynamic range reduced raw multi-channel audio signal by the multi-channel Generator. In other words, the two or more channels of the dynamic range reduced raw multi-channel audio signal are input into the multi-channel Generator at the same time. In step 104, the two or more channels of the dynamic range reduced raw multi-channel audio signal are then jointly enhanced by the multi-channel Generator in the dynamic range reduced domain, details of which will be described further below. The enhancement process performed by the multi-channel Generator is intended to enhance the quality of the dynamic range reduced raw multi-channel audio signal by reducing coding artifacts and quantization noise. In step 105, an enhanced dynamic range reduced multi-channel audio signal for subsequent expansion of the dynamic range is obtained as an output from the multi-channel Generator, wherein the enhanced dynamic range reduced multi-channel audio signal comprises two or more channels.

In one embodiment, the method may further include the step of expanding the enhanced dynamic range reduced multi-channel audio signal to an expanded dynamic range domain by performing an expansion operation on the two or more channels. In one embodiment, the expansion operation may be a companding operation based on a p-norm of spectral magnitudes for calculating respective gain values. In companding (compression/expansion) in general, gain values for compression and expansion are calculated and applied in a filter-bank. A short prototype filter may be applied to resolve potential issues associated with the application of individual gain values. Referring to the above companding operation, the enhanced dynamic range reduced multi-channel audio signal as output by the multi-channel Generator may be analyzed by a filter-bank and a wideband gain may be applied directly in the frequency domain to the two or more channels of the enhanced dynamic range reduced multi-channel audio signal. According to the shape of the prototype filter applied, the corresponding effect in time domain is to naturally smooth the gain application. The modified frequency signal is then converted back to the time domain in the respective synthesis filter bank. In this context, it is to be noted that there may be many QMF tools which may be subsequently run prior to converting from QMF back to the time domain including in a nonlimiting manner one or more of bandwidth extension and parametric upmixing. Analyzing a signal with a filter bank provides access to its spectral content, and allows the calculation of gains that preferentially boost the contribution due to the high frequencies, (or to boost contribution due to any spectral content that is weak), providing gain values that are not dominated by the strongest components in the signal, thus resolving problems associated with audio sources that comprise a mixture of different sources. In this context, the gain values may be calculated using a p-norm of the spectral magnitudes where p is typically less than 2, which has been found to be more effective in shaping quantization noise, than basing on energy as for p = 2.

The above described method may be implemented by any decoder. If the above method is applied in conjunction with companding, the above described method may be implemented by an AC-4 decoder.

Alternatively, or additionally, the above method may also be performed by a system of an apparatus for generating, in a dynamic range reduced domain, an enhanced multi-channel audio signal from an audio bitstream including a multi-channel audio signal and a Generative Adversarial Network comprising a multi-channel Generator, a group of one or more single-channel Discriminators and a multi-channel Discriminator.

The apparatus may be a decoder.

The above method may also be carried out by an apparatus for generating, in a dynamic range reduced domain, an enhanced multi-channel audio signal from an audio bitstream including a multi-channel audio signal. The apparatus may include a receiver for receiving the audio bitstream. The apparatus may further include a core decoder for core decoding the audio bitstream and for obtaining a dynamic range reduced raw multi-channel audio signal based on the received audio bitstream, wherein the dynamic range reduced raw multi-channel audio signal comprises two or more channels. And the apparatus may include a multi-channel Generator for jointly enhancing the two or more channels of the dynamic range reduced raw multi-channel audio signal in the dynamic range reduced domain and for obtaining an enhanced dynamic range reduced multi-channel audio signal, wherein the enhanced dynamic range reduced multi-channel audio signal comprises two or more channels. In one embodiment, the apparatus may further include a demultiplexer. In one embodiment, the apparatus may further include an expansion unit. In one embodiment, the apparatus may further include a dynamic range reduction unit.

Alternatively, or additionally, the apparatus may be part of a system of an apparatus for applying dynamic range reduction to an input multi-channel audio signal and encoding the dynamic range reduced multi-channel audio signal in an audio bitstream and the apparatus for generating, in a dynamic range reduced domain, an enhanced multi-channel audio signal from an audio bitstream including a multi-channel audio signal.

Alternatively, or additionally, the above method may be implemented by a respective computer program product comprising a computer-readable storage medium with instructions adapted to cause the device to carry out a method of generating, in a dynamic range reduced domain, an enhanced multi-channel audio signal from an audio bitstream including a multi-channel audio signal when executed by a device having processing capability.

*Metadata*

Alternatively, or additionally, the above method may involve metadata. In one embodiment, the received audio bitstream may include metadata and step 101 may further include demultiplexing the received audio bitstream. In one embodiment, in step 104 as described above, jointly enhancing the two or more channels of the dynamic range reduced raw multi-channel audio signal by the multi-channel Generator may be based on the metadata. As stated above, methods, apparatus and systems as described herein may be valuable if applied in conjunction with companding. In one embodiment, the metadata may thus include one or more items of companding control data. Companding in general may provide benefit for speech and transient signals, while degrading the quality of some stationary signals as modifying each QMF time slot individually with a gain value may result in discontinuities during encoding that, at the companding decoder, may result in discontinuities in the envelope of the shaped noise leading to audible artifacts. By respective companding control data, it is possible to selectively switch companding on for transient signals and off for stationary signals or to apply average companding where appropriate. Average companding, in this context, refers to the application of a constant gain to an audio frame resembling the gains of adjacent active companding frames. The companding control data may be detected during encoding and transmitted via the audio bitstream to the decoder. In one embodiment, the companding control data may thus include information on a companding mode among one or more companding modes that had been used for encoding the multi-channel audio signal. In one embodiment, the companding mode may include the companding mode of companding on, the companding mode of companding off, and the companding mode of average companding. In one embodiment, in step 104 as described above, jointly enhancing the two or more channels of the dynamic range reduced raw multi-channel audio signal by the multi-channel Generator may depend on the companding mode indicated by the companding control data. In one embodiment, if the companding mode is companding off, joint enhancing by the multi-channel Generator may not be performed. While in embodiments reference is made to metadata that may include one or more items of companding control data, this is, however, not intended to be limiting. Alternatively, or additionally, jointly enhancing the two or more channels of the dynamic range reduced raw multi-channel audio signal by the multi-channel Generator may also be based on parameters derived from other metadata or a combination of other metadata.

*Generative Adversarial Network setting*

In step 104, as described above, the multi-channel Generator jointly enhances the two or more channels of the dynamic range reduced raw multi-channel audio signal in the dynamic range reduced domain. By the enhancement, coding artifacts are reduced and the quality of the dynamic range reduced multi-channel audio signal as compared to an original uncoded dynamic range reduced multi-channel audio signal is enhanced already prior to expansion of the dynamic range of the two or more channels of the dynamic range reduced multi-channel audio signal.

In one embodiment, the multi-channel Generator may be a Generator trained in a dynamic range reduced domain in a Generative Adversarial Network setting (GAN setting). The dynamic range reduced domain may be an AC-4 companded domain, for example. In some cases (such as in AC-4 companding), dynamic range reduction may be equivalent to removing (or suppressing) the temporal envelope of the signal. Thus, it may be said that the multi-channel Generator may be a Generator trained in a domain after removing the temporal envelope from the signal. Moreover, while in the following a GAN setting will described, it is noted that this is not to be understood in a limiting sense and that also other generative models are conceivable and included in the scope of the present disclosure.

The GAN setting includes the multi-channel Generator G, a group of one or more single-channel Discriminators Dk and a multi-channel Discriminator Dj which are trained each by an iterative process. During training in the Generative Adversarial Network setting, the multi-channel Generator G jointly generates an enhanced dynamic range reduced multi-channel audio training signal, $x^*$, which includes two or more channels, based on a dynamic range reduced raw multi-channel audio training signal, $\tilde{x}$, (core encoded and core decoded), which also includes two or more channels, and which is derived from a corresponding original dynamic range reduced multi-channel audio signal, x. Dynamic range reduction may be performed by applying a companding operation on the two or more channels of the multi-channel audio signal. The companding operation may be a companding operation as specified for the AC-4 codec and performed in an AC-4 encoder.

In an embodiment, a random noise vector, z, may be input into the multi-channel Generator in addition to the dynamic range reduced raw multi-channel audio training signal, $\tilde{x}$, and jointly generating, by the multi-channel Generator, the enhanced dynamic range reduced multi-channel audio training signal, $x^*$, may be based additionally on the random noise vector, z. In an embodiment, the additional input of the random noise vector, z, may be conditioned on a bit rate of an audio bitstream including the original multi-channel audio signal from which the dynamic range reduced multi-channel audio training signal has been derived and/or on a number of channels of the dynamic range reduced multi-channel audio training signal. For example, in case of a stereo signal, the random noise vector, z, may be used for 36 kbit/s or lower. For applause, the random noise vector, z, may be used for all bit rates. The random noise vector may, however, also be set to z = 0. For not too low bit rates, coding artifact reduction yields good results if the random noise vector is set to z = 0. Alternatively, training may be performed without the input of a random noise vector z. Alternatively, or additionally, in one embodiment, metadata may be input into the multi-channel Generator and jointly generating the enhanced dynamic range reduced multi-channel audio training signal, $x^*$, may be based additionally on the metadata. During training, the joint generation of the enhanced dynamic range reduced multi-channel audio training signal, $x^*$, may thus be conditioned based on the metadata. In one embodiment, the metadata may include one or more items of companding control data. In one embodiment, the companding control data may include information on a companding mode among one or more companding modes used for encoding audio data. In one embodiment, the companding modes may include the companding mode of companding on, the companding mode of companding off and the companding mode of average companding. In one embodiment, jointly generating, by the multi-channel Generator, the enhanced dynamic range reduced multi-channel audio training signal, $x^*$, may depend on the companding mode indicated by the companding control data. In this, during training, the multi-channel Generator may be conditioned on the companding modes. In one embodiment, if the companding mode is companding off, this may indicate that the input raw multi-channel audio training signal is not dynamic range reduced and joint enhancing by the multi-channel Generator may not be performed in this case. As stated above, companding control data may be detected during encoding of the multi-channel audio signal and enable to selectively apply companding in that companding is switched on for transient signals, switched off for stationary signals and average companding is applied where appropriate.

During training, the multi-channel Generator tries to output an enhanced dynamic range reduced multi-channel audio training signal, $x^*$, that is indistinguishable from the corresponding original dynamic range reduced multi-channel audio signal, x. In a first step, a single-channel Discriminator Dk of a group of one or more single-channel Discriminators is one at a time fed with each channel of the two or more channels of the generated enhanced dynamic range reduced multi-channel audio training signal, $x^*$, and the corresponding channel of the original dynamic range reduced multi-channel audio signal, x, from which the dynamic range reduced raw multi-channel audio training signal has been derived, and judges in a fake/real manner whether the input data are a channel of the generated enhanced dynamic range reduced multi-channel audio training signal, $x^*$, or the corresponding channel of the original dynamic range reduced multi-channel audio signal, x. In this, the single-channel Discriminator Dk tries to discriminate each channel of the original dynamic range reduced multi-channel audio signal, x, from the corresponding channels of the enhanced dynamic range reduced multi-channel audio training signal, x*. During the iterative process, the multi-channel Generator then tunes its parameters to generate a better and better enhanced dynamic range reduced multi-channel audio training signal, x*, as compared to the original dynamic range reduced multi-channel audio signal, x, and the single-channel Discriminator Dk learns to better judge between the two or more channels of the enhanced dynamic range reduced multi-channel audio training signal, x*, and the corresponding channels of the original dynamic range reduced multi-channel audio signal, x.

It shall be noted that the step of judging, by the single-channel Discriminator Dk, in a fake/real manner whether the input data are a channel of the generated enhanced dynamic range reduced multi-channel audio training signal, x*, or the corresponding channel of the original dynamic range reduced multi-channel audio signal, x, may be performed by the same single-channel Discriminator Dk for each channel of the generated enhanced dynamic range reduced multi-channel audio training signal, x*. Alternatively, or additionally, the step of judging, by the single-channel Discriminator Dk, in a fake/real manner whether the input data are a channel of the generated enhanced dynamic range reduced multi-channel audio training signal, x*, or the corresponding channel of the original dynamic range reduced multi-channel audio signal, x, may be performed by a group of single-channel Discriminators Dk, wherein each channel of the generated enhanced dynamic range reduced multi-channel audio training signal, x*, and each corresponding channel of the original dynamic range reduced multi-channel audio signal, x, is input into an individual single-channel Discriminator Dk trained on that channel. In an embodiment, the group of the one or more single-channel Discriminators Dk may be chosen based on a type of the original dynamic range reduced multi-channel audio signal, wherein the type of the original dynamic range reduced multi-channel audio signal may include a stereo type multi-channel audio signal, a 5.1 type multi-channel audio signal, a 7.1 type multi-channel audio signal or a 9.1 type multi-channel audio signal.

In a second step, a multi-channel Discriminator Dj is one at a time fed with the generated enhanced dynamic range reduced multi-channel audio training signal, x*, and the corresponding original dynamic range reduced multi-channel audio signal, x, from which the dynamic range reduced raw multi-channel audio training signal has been derived, and judges in a fake/real manner whether the input data are the generated enhanced dynamic range reduced multi-channel audio training signal, x*, or the corresponding original dynamic range reduced multi-channel audio signal, x. In this, the multi-channel Discriminator Dj tries to discriminate the original dynamic range reduced multi-channel audio signal, x, from the enhanced dynamic range reduced multi-channel audio training signal, x*. During the iterative process, the multi-channel Generator then tunes its parameters to generate a better and better enhanced dynamic range reduced multi-channel audio training signal, x*, as compared to the original dynamic range reduced multi-channel audio signal, x, and the multi-channel Discriminator Dj learns to better judge between the enhanced dynamic range reduced multi-channel audio training signal, x*, and the original dynamic range reduced multi-channel audio signal, x.

It shall be noted that the single-channel Discriminator Dk and the multi-channel Discriminator Dj may be trained first in order to train the multi-channel Generator in a final step. Training and updating of the Discriminators may also be performed in the dynamic range reduced domain. Training and updating the Discriminators may involve maximizing the probability of assigning high scores to original dynamic range reduced multi-channel audio signals, x, and low scores to enhanced dynamic range reduced multi-channel audio training signals, x*. The goal in training of the Discriminators may be that the original dynamic range reduced multi-channel audio signal, x, is recognized as real while the enhanced dynamic range reduced multi-channel audio training signal, x*, (generated data) is recognized as fake. While the Discriminators are trained and updated, the parameters of the multi-channel Generator may be kept fix.

Training and updating the multi-channel Generator may involve minimizing the difference between the original dynamic range reduced multi-channel audio signal, x, and the generated enhanced dynamic range reduced multi-channel audio training signal, x*. The goal in training the multi-channel Generator may be to achieve that the single-channel Discriminator Dk recognizes each of the two or more channels of the generated enhanced dynamic range reduced multi-channel audio training signal, x*, as real. And further that the multi-channel Discriminator Dj recognizes the generated enhanced dynamic range reduced multi-channel audio training signal, x*, as real.

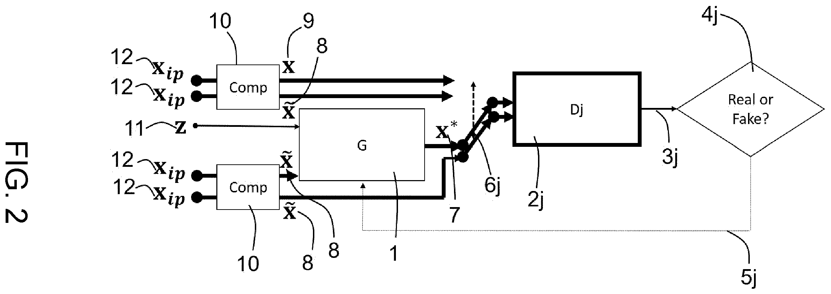

Referring now to the example of Figure 2, training of a multi-channel Generator, G, 1, in the dynamic range reduced domain in a Generative Adversarial Network (GAN) setting is described in more detail. In the example of Figure 2, the GAN setting includes the multi-channel Generator G, 1, and a multi-channel Discriminator Dj, 2j. Training of the multi-channel Generator, G, 1, may involve the following.

An original multi-channel audio signal including two or more channels, $x_{ip}$, 12, may be subjected to dynamic range reduction, comp, 10, to obtain a dynamic range reduced original multi-channel audio signal including two or more channels, x, 9. The dynamic range reduction may be performed by applying a companding operation on each of the two or more channels, in particular, an AC-4 companding operation followed by a QMF (quadrature mirror filter) synthesis step. As the companding operation is performed in the QMF-domain, the subsequent QMF synthesis step is required. Before inputting into the multi-channel Generator, G, 1, the dynamic range reduced original multi-channel audio signal, x, 9, may be subjected in addition to core encoding and core decoding to obtain a dynamic range reduced raw multi-channel audio training signal, $\bar{x}$, 8. The dynamic range reduced raw multi-channel audio training signal, $\bar{x}$, 8, and a random noise vector, z, 11, are then input into the multi-channel Generator G, 1. Based on the input, the multi-channel Generator, G, 1, then jointly generates in the dynamic range reduced domain the enhanced dynamic range reduced multi-channel audio training signal, x*, 7. In an embodiment, the input of the random noise vector, z, may be conditioned on a bit rate of an audio bitstream including the original multi-channel audio signal from which the dynamic range reduced multi-channel audio training signal has been derived and/or on a number of channels of the dynamic range reduced multi-channel audio training signal. In an embodiment, the random noise vector, z, 11, may be set to z = 0. Alternatively, training may be performed without the input of a random noise vector, z, 11. Alternatively, or additionally, the multi-channel Generator, G, 1, may be trained using metadata as input in a dynamic range reduced coded multi-channel audio feature space to modify the enhanced dynamic range reduced multi-channel audio training signal, x*, 7. One at a time, the original dynamic range reduced multi-channel audio signal, x, 9, from which the dynamic range reduced raw multi-channel audio training signal, x̃, 8, has been derived, and the generated enhanced dynamic range reduced multi-channel audio training signal, x*, 7, are input, 6j, into the multi-channel Discriminator, Dj, 2j. As additional information, also the dynamic range reduced raw multi-channel audio training signal, x̃, 8, may be input each time into the multi-channel Discriminator Dj, 2j. The multi-channel Discriminator Dj, 2j, then judges, 3j, 4j, whether the input data is the enhanced dynamic range reduced multi-channel audio training signal, x*, 7, (fake) or the original dynamic range reduced multi-channel audio signal, x, 9, (real).

In a next step, the parameters of the multi-channel Generator, G, 1, are then tuned until the multi-channel Discriminator, Dj, 2j, can no longer distinguish the enhanced dynamic range reduced multi-channel audio training signal, x*, 7, from the original dynamic range reduced multi-channel audio signal, x, 9. This may be done in an iterative process, 5j.

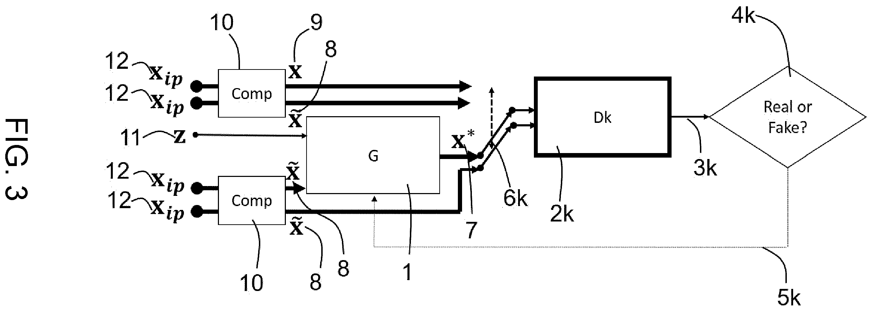

Referring now to the example of Figure 3, training of a multi-channel Generator, G, 1, in the dynamic range reduced domain in a Generative Adversarial Network (GAN) setting is described in more detail, wherein in the example of Figure 3, the GAN setting includes the multi-channel Generator G, 1, and a single-channel Discriminator Dk, 2k. Training of the multi-channel Generator, G, 1, may involve the following.

The dynamic range reduced raw multi-channel audio training signal, x̃, 8, and the enhanced dynamic range reduced multi-channel audio training signal, x*, 7 may be obtained as described above. One at a time, a channel *k* of the original dynamic range reduced multi-channel audio signal, x, 9, from which the dynamic range reduced raw multi-channel audio training signal, x̃, 8, has been derived, and the corresponding channel of the generated enhanced dynamic range reduced multi-channel audio training signal, x*, 7, are input, 6k, into the single-channel Discriminator, Dk, 2k, (note that narrow lines indicate individual channels, while bold lines indicate the multi-channel signal). As additional information, also the corresponding channel of the dynamic range reduced raw multi-channel audio training signal, x̃, 8, may be input each time into the single-channel Discriminator Dk, 2k. The single-channel Discriminator Dk, 2k, then judges, 3k, 4k, whether the input data is the channel of the enhanced dynamic range reduced multi-channel audio training signal, x*, 7, (fake) or the corresponding channel of the original dynamic range reduced multi-channel audio signal, x, 9, (real).

In a next step, the parameters of the multi-channel Generator, G, 1, are then tuned until the single-channel Discriminator, D, 2k, can no longer distinguish the channel of the enhanced dynamic range reduced multi-channel audio training signal, x*, 7, from the corresponding channel of the original dynamic range reduced multi-channel audio signal, x, 9. This may be done in an iterative process, 5k. Note that while the step of judging, as described above, may be performed by the same single-channel Discriminator Dk, 2k, for each channel of the respective enhanced dynamic range reduced multi-channel audio training signal, x*, 7, and the original dynamic range reduced multi-channel audio signal, x, 9, alternatively, or additionally, said step of judging may also be individually performed for each channel by a respective channel-specific single-channel Discriminator Dk, 2k, of a group of one or more single-channel Discriminators Dk. The group of the one or more single-channel Discriminators Dk may be chosen based on a type of the original dynamic range reduced multi-channel audio signal, wherein the type of the original dynamic range reduced multi-channel audio signal may include a stereo type multi-channel audio signal, a 5.1 type multi-channel audio signal, a 7.1 type multi-channel audio signal, or a 9.1 type multi-channel audio signal.

Judging by the single-channel Discriminator Dk and the multi-channel Discriminator Dj may be based on one or more of a perceptually motivated objective function as according to the following equation (1), wherein Nc refers to the total number of channels of the multi-channel audio signal:

$$\min_G V_{LS-GAN}(G) = \left[ \sum_{k=1}^{Nc} \mathbb{E}_{\mathbf{z} \sim p_z(\mathbf{z}), \tilde{x}_k \sim p_{data}(\tilde{x}_k)} \left[ (D_k(\mathbf{x}_k^*, \tilde{\mathbf{x}}_k) - 1)^2 \right] \right] + \mathbb{E}_{\mathbf{z} \sim p_z(\mathbf{z}), \tilde{x} \sim p_{data}(\tilde{x})} \left[ (D_j(\mathbf{x}^*, \tilde{\mathbf{x}}) - 1)^2 \right]$$
$$+ \lambda \sum_{k=1}^{Nc} \| \mathbf{x}_k^* - \mathbf{x}_k \|_1$$

(1)

The index LS refers to the incorporation of a least squares approach. In addition, as can be seen from the first and second term in equation (1), a conditioned Generative Adversarial Network setting has been applied by inputting the core decoded dynamic range reduced raw multi-channel audio signal, x̃, as additional information into both, the single-channel Discriminator Dk and the multi-channel Discriminator Dj. This enables the Discriminators to learn the conditional classification task, i.e. whether the input of the Discriminator is the original or enhanced signal based on the given coded signal.

The introduction of the last term, which refers to the single-channel Discriminator Dk in the above equation (1), helps to ensure during the iterative process that lower frequencies are not disrupted as these frequencies are typically coded with a higher number of bits. The last term is a 1-norm distance scaled by the factor lambda $\lambda$. The value of lambda may be chosen of from 10 to 100 depending on the application and/or signal length that is input into the multi-channel Generator. For example, lambda may be chosen to be $\lambda = 100$.

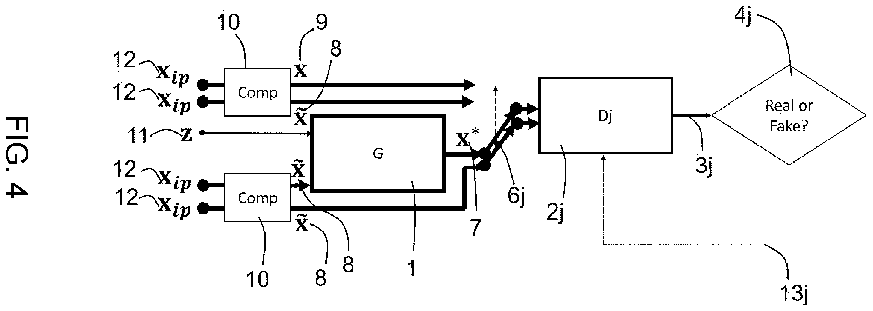

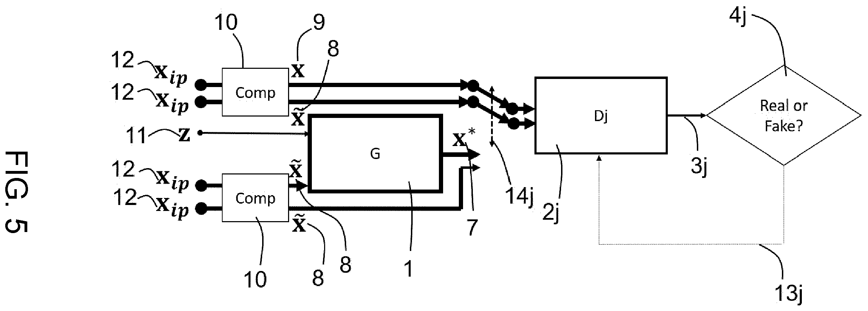

Referring now to the examples of Figures 4 and 5, training of the multi-channel Discriminator, Dj, 2j, in the dynamic range reduced domain in the Generative Adversarial Network setting may follow the same general iterative process, 13j, as described above for the training of the multi-channel Generator, G, 1, in response to inputting, one at a time, 6j, 14j, the enhanced dynamic range reduced multi-channel audio training signal, x*, 7, and the original dynamic range reduced multi-channel audio signal, x, 9, together with the dynamic range reduced raw multi-channel audio training signal, $\tilde{x}$, 8, into the multi-channel Discriminator, Dj, 2j, except that in this case the parameters of the multi-channel Generator, G, 1, may be fixed while the parameters of the multi-channel Discriminator, Dj, 2j, may be varied (indicated by the bold lines around the Discriminator in Figures 2 and 3 as compared to Figures 4 and 5). The training of the multi-channel Discriminator, Dj, 2j, may be described by the following equation (2) that enables the multi-channel Discriminator, Dj, 2j to determine the enhanced dynamic range reduced multi-channel audio training signal, x*, 7, as fake:

$$\min_{D_j} V_{LS-GAN}\big(D_j\big) = \mathbb{E}_{\mathbf{x},\tilde{\mathbf{x}}\sim p_{data}(\mathbf{x},\tilde{\mathbf{x}})}\big[(D_j(\mathbf{x},\tilde{\mathbf{x}}) - 1)^2\big] + \mathbb{E}_{\mathbf{z}\sim p_z(\mathbf{z}),\tilde{\mathbf{x}}\sim p_{data}(\tilde{\mathbf{x}})}\big[D_j(\mathbf{x}^*,\tilde{\mathbf{x}})^2\big] \qquad (2)$$

In the above case, also the least squares approach (LS) and a conditioned Generative Adversarial Network setting has been applied by inputting the core decoded dynamic range reduced raw multi-channel audio training signal, $\tilde{x}$, as additional information into the multi-channel Discriminator Dj.

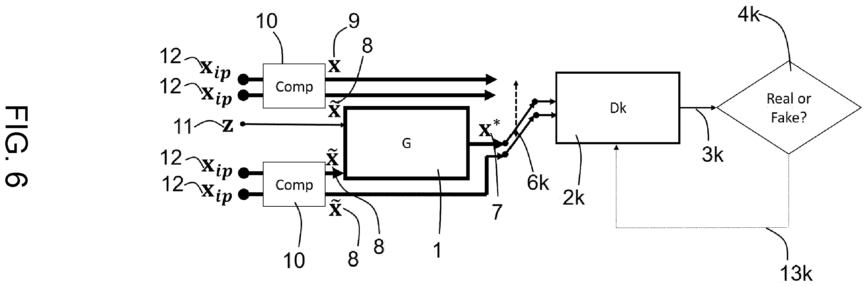

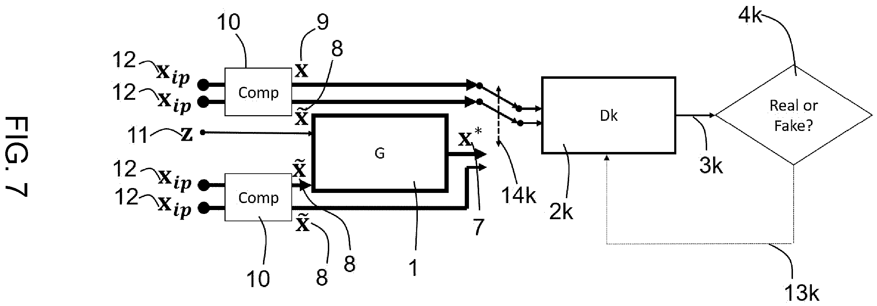

Referring now to the examples of Figures 6 and 7, training of the single-channel Discriminator, Dk, 2k, in the dynamic range reduced domain in the Generative Adversarial Network setting may also follow the same general iterative process, 13k, as described above for the training of the multi-channel Generator, G, 1, in response to inputting, one at a time, 6k, 14k, a channel of the enhanced dynamic range reduced multi-channel audio training signal x*, 7, and the corresponding channel of the original dynamic range reduced multi-channel audio signal, x, 9, together with the corresponding channel of the dynamic range reduced raw multi-channel audio training signal, $\tilde{x}$, 8, into the single-channel Discriminator, Dk, 2k, except that in this case also the parameters of the multi-channel Generator, G, 1, may be fixed while the parameters of the single-channel Discriminator, Dk, 2k, may be varied (indicated by the bold lines around the Discriminator in Figures 2 and 3 as compared to Figures 6 and 7). The training of the single-channel Discriminator, Dk, 2k, may be described by the following equation (3) that enables the single-channel Discriminator, Dk, 2k, to determine a channel of the enhanced dynamic range reduced multi-channel audio training signal, x*, 7, as fake:

$$\min_{D_k} V_{LS-GAN}(D_k) = \mathbb{E}_{\mathbf{x}_k,\tilde{\mathbf{x}}_k\sim p_{data}(\mathbf{x}_k,\tilde{\mathbf{x}}_k)}[(D_k(\mathbf{x}_k,\tilde{\mathbf{x}}_k) - 1)^2] + \mathbb{E}_{\mathbf{z}\sim p_z(\mathbf{z}),\tilde{\mathbf{x}}_k\sim p_{data}(\tilde{\mathbf{x}}_k)}[D_k(\mathbf{x}_k^*,\tilde{\mathbf{x}}_k)^2], \qquad \forall_k = 1,\dots,N\mathrm{c}$$

$$(3)$$

In the above case, also the least squares approach (LS) and a conditioned Generative Adversarial Network setting has been applied by inputting the corresponding channel of the core decoded dynamic range reduced raw multi-channel audio training signal, $\tilde{x}$, as additional information into the single-channel Discriminator Dk. Nc further denotes the number of channels of the multi-channel audio signal the multi-channel Generator enhances.

It is to be noted that based on the above described training, a single-channel Discriminator Dk may either be trained to determine only one channel of an enhanced dynamic range reduced multi-channel audio training signal, x*, 7, as fake, or to determine each channel of an enhanced dynamic range reduced multi-channel audio training signal, x*, 7, as fake, wherein the enhanced dynamic range reduced multi-channel audio training signal may include a stereo type multi-channel audio signal, a 5.1 type multi-channel audio signal, a 7.1 type multi-channel audio signal or a 9.1 type multi-channel audio signal.

Generally, training with both the single-channel Discriminator and the multi-channel Discriminator, a better control over the individual channels as well as over the overall spatial impression is achieved.

Besides the least squares approach, also other training methods may be used for training the multi-channel Generator as well as the multi-channel Discriminator Dj and the single-channel Discriminator Dk in a Generative Adversarial Network setting in the dynamic range reduced domain. The present disclosure is not limited to a particular training method. Alternatively, or additionally, the so-called Wasserstein approach may be used. In this case, instead of the least squares distance, the Earth Mover Distance also known as Wasserstein Distance may be used. In general, different training methods make the training of the multi-channel Generator and the Discriminators more stable. The kind of training method applied, does, however, not impact the architecture of the multi-channel Generator which is detailed below.

*Architecture of the multi-channel Generator*

While the architecture of the multi-channel Generator is generally not limited, in one embodiment, the multi-channel Generator may include an encoder stage and a decoder stage. The encoder stage and the decoder stage of the multi-channel Generator may be fully convolutional. In one embodiment, the decoder stage may mirror the encoder stage and the encoder stage as well as the decoder stage may each include a number of L layers with a number of N filters in each layer L. L may be a natural number $\geq 1$ and N may be a natural number $\geq 1$. The size (also known as kernel size) of the N filters is not limited and may be chosen according to the requirements of the enhancement of the quality of the dynamic range reduced raw multi-channel audio signal by the multi-channel Generator. The filter size may, however, be the same in each of the L layers.

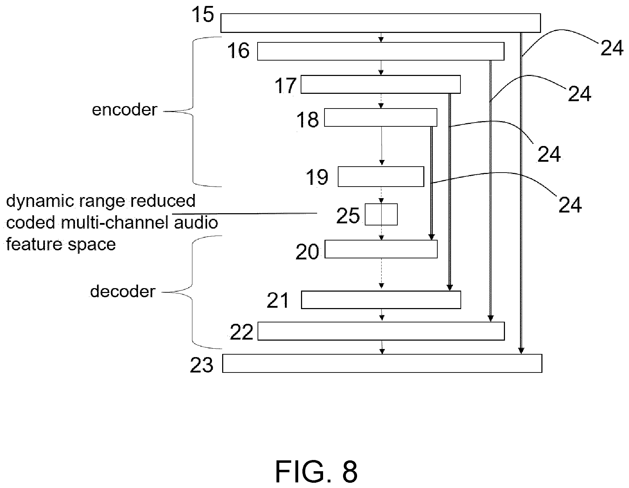

Referring now to the example of Figure 8, which illustrates schematically an example of an architecture of a multi-channel Generator, a dynamic range reduced raw multi-channel audio signal comprising two or more channels may be input into the multi-channel Generator in a first step, 15. In an embodiment, this input layer, 15, may be a non-strided (e.g., stride = 1 implying non-strided) convolutional layer prepending the encoder stage.

The output of the learned, non-strided convolution layer (e.g., input layer 15) can be viewed as several (where the exact number depends on the number of filters or kernels of the non-strided convolution layer) combinations of individual input channels. Thus, the output of such a layer can be viewed as a multi-channel mid-side signal. For example, for a stereo input signal (e.g., a two-channel input signal), if $X_L$ and $X_R$ are left and right channels, then the mid signal $M = 0.5*(X_L + X_R)$ and side signal $S = 0.5*(X_L - X_R)$. Accordingly, if multi-channel mid-side signals are created, then multiple combinations of $X_L$ and $X_R$ are generated. Such a system, when learned, can provide additional hints about the spatial relationship between $X_L$ and $X_R$. For example, when considering the simple case of the side signal $S = 0$, then it is most likely that $X_L = X_R$. Accordingly, the prepended non-strided convolutional layer allows for conditioning the setup with information about the audio signals (e.g., both the original audio signals and coded audio signals) and their corresponding spatial relationships (e.g., spatial relationships between the original audio signal and the coded audio signal). Therefore, if any spatial width is lost due to coding, it can be restored with the proposed system, thus jointly performing coded audio enhancement that includes spatial enhancement.

Exemplary values of number of filters N = 16 and filter size of 31 in the input layer yield good results, for example, the least amount of coding artifacts. A non-linear activation may be performed in the input layer which may be a parametric rectified linear unit (PReLU). The first illustrated encoder layer, 16, layer number L = 1, may include N = 16 filters having a filter size of 31. The second illustrated encoder layer, 17, layer number L = 2, may include N = 32 filters having a filter size of 31. Subsequent layers are omitted for reasons of clarity and conciseness. The third illustrated encoder layer, 18, layer number L = 11, may include N = 512 filters having a filter size of 31. In each layer the number of filters may thus increase. In one embodiment, each of the filters may operate on the two or more channels of the dynamic range reduced multi-channel audio signal input into each of the encoder layers with a stride of > 1. Each of the filters may, for example, operate on the two or more channels of the dynamic range reduced multi-channel audio signal input into each of the encoder layers with a stride of 2. Thus, a learnable down-sampling by a factor of 2 may be performed.

Alternatively, the filters may also operate with a stride of 1 in each of the encoder layers followed by a down-sampling by a factor of 2 (as in known signal processing). Alternatively, for example, each of the filters may operate on the two or more channels of the dynamic range reduced multi-channel audio signal input into each of the encoder layers with a stride of 4. This may enable to half the overall number of layers in the multi-channel Generator.

In at least one encoder layer and in at least one decoder layer of the multi-channel Generator, a non-linear operation may be performed in addition as an activation. In one embodiment, the non-linear operation may include one or more of a parametric rectified linear unit (PReLU), a rectified linear unit (ReLU), a leaky rectified linear unit (LReLU), an exponential linear unit (eLU) and a scaled exponential linear unit (SeLU). In the example of Figure 8, the non-linear operation is based on PReLU.

As is schematically illustrated in Figure 8, the respective decoder layers, 22, 21, 20, mirror the encoder layers, 16, 17, 18. While the number of filters in each layer and the filter widths in each layer may be the same in the decoder stage as in the encoder stage, up-sampling of the multi-channel audio signal in the decoder stage may be performed by two alternative approaches. In one embodiment, fractionally-strided convolution (also known as transposed convolution) operations may be used in the layers 20, 21, 22, of the decoder stage. Alternatively, in each layer of the decoder stage the filters may operate on the two or more channels of the multi-channel audio signal input into each layer with a stride of 1, after up-sampling and interpolation is performed as in conventional signal processing with the up-sampling factor of 2.

In addition, in one embodiment, the multi-channel Generator may further include a non-strided (meaning transposed convolution with stride = 1) transposed convolutional layer as an output layer, 23, subsequently following the decoder stage. In this example, the output layer, 23, may include N = 2 filters having a filter size of 31. It is to be noted that the number of filters in the output layer may be equal to the number of channels Nc of the multi-channel audio signal the multi-channel Generator enhances. For example, in case of a stereo enhancement it may hold for the output layer Nc = N = 2. In the output layer, 23, the activation may be different to the activation performed in the at least one of the encoder layers and the at least one of the decoder layers. The activation may be based, for example, on a tanh operation.

In between the encoder stage and the decoder stage, the dynamic range reduced multi-channel audio signal may be modified to generate the enhanced dynamic range reduced multi-channel audio signal. In one embodiment, the modification may be based on a dynamic range reduced coded multi-channel audio feature space, 25, (also known as bottleneck layer). In one embodiment, a random noise vector, z, may be used in the dynamic range reduced coded multi-channel audio feature space, 25, for modifying the two or more channels of the multi-channel audio signal in the dynamic range reduced domain. The modification in the dynamic range reduced coded multi-channel audio feature space, 25, may be done, for example, by concatenating the random noise vector (z) with the vector representation (c) of the two or more channels of the multi-channel audio signal as output from the last layer in the encoder stage. In an embodiment, the use of the random noise vector, z, may be conditioned on a bit rate of the audio bitstream and/or on the number of channels of the multi-channel audio signal. For example, the random noise vector, z, may be used in case of a stereo signal for 36kbit/s or lower and may be used for all bit rates in case of applause. The random noise vector may, however, also be set to z = 0. For not too low bit rates, coding artifact reduction yields good results if the random noise vector is set to z = 0. Alternatively, or additionally, metadata may be input at this point to modify the two or more channels of the multi-channel audio signal. In this, generation of the enhanced dynamic range reduced multi-channel audio signal may be conditioned based on given metadata.

In one embodiment, skip connections, 24, may exist between homologous layers of the encoder stage and the decoder stage as well as between the input layer prepending the encoder stage and the output layer subsequently following (appending) the decoder stage. In this, the dynamic range reduced coded multi-channel audio feature space, 25, described above may be bypassed preventing loss of information. In one embodiment, skip connections, 24, may be implemented using one or more of concatenation and signal addition. Due to the implementation of skip connections, 24, the number of filter outputs may be "virtually" doubled.

Referring to the example in Figure 8, the architecture of the multi-channel Generator may be summarized as follows:

15/input layer: non-strided convolutional layer: filter number N = 16, filter size = 31, activation = PreLU

16/encoder layer L = 1: filter number N = 16, filter size = 31, activation = PreLU

17/encoder layer L = 2: filter number N = 32, filter size = 31, activation = PreLU

18/ encoder layer L = 11: filter number N = 512, filter size = 31

19/ encoder layer L = 12: filter number N = 1024, filter size = 31

25/ dynamic range reduced coded multi-channel audio feature space

20/decoder layer L = 1: filter number N = 512, filter size = 31

21/decoder layer L = 10: filter number N = 32, filter size = 31, activation PreLU

22/decoder layer L = 11: filter number N = 16, filter size = 31, activation PreLU

23/output layer: filter number N = 2, filter size = 31, activation tanh

24/ skip connections

The above presented architecture merely represents an example. Depending on the application, the number of layers in the encoder stage and in the decoder stage of the multi-channel Generator may be down-scaled or up-scaled, respectively.

In general, the above multi-channel Generator architecture offers the possibility of one-shot artifact reduction as no complex operation as in Wavenet or sampleRNN has to be performed.

Additionally, the above multi-channel Generator (e.g., configured with a non-strided convolutional layer operating jointly on the multi-channel input signal (and correspondingly generating a multi-channel enhanced output signal with a non-strided transposed convolution layer)) has a better utilization of spatial redundancy, which leads to reduced complexity when compared to applying one or more single-channel Generators. For example, for a stereo (e.g., two-channel) input signal (with settings providing the best audio quality), a stereo Generator (e.g., multi-channel Generator) may have 0.14% more parameters when compared to a single-channel Generator. This parameter increase translates to 12.1% more complexity over the single-channel Generator. However, since the stereo input signal is now is processed jointly in the stereo (e.g., multi-channel) Generator (rather than two individual single-channel Generators), there is a 44% saving in complexity in comparison with the two individual single-channel Generators.

*Architecture of the Discriminator*

The architecture of both, the single-channel Discriminator and the multi-channel Discriminator, is not limited. The architecture of the multi-channel Discriminator may follow the same structure as the encoder stage of the multi-channel Generator described above. The multi-channel Discriminator architecture may mirror the encoder stage of the multi-channel Generator. The multi-channel Discriminator may thus include a number of L layers, wherein each layer may include a number of N filters. L may be a natural number $\geq 1$ and N may be a natural number $\geq 1$. The size of the N filters is not limited and may also be chosen according to the requirements of the Discriminator. The filter size may, however, be the same in each of the L layers. A non-linear operation performed in at least one of the encoder layers of the Discriminator may include LReLU. Prepending the encoder stage, the multi-channel Discriminator may include an input layer. The input layer may be a non-strided convolutional layer (stride = 1 implying non-strided) as described above. Following the encoder stage, the multi-channel Discriminator may include an output layer. The output layer may have N = 1 filters (the Discriminator makes a single real/fake judgement) having a filter size of 1. In this, the filter size of the output layer may be different from the filter size of the encoder layers. The output layer may thus be a one-dimensional convolution layer that does not down-sample hidden activations. This means that the filter in the output layer may operate with a stride of 1 while all previous layers of the encoder stage of the multi-channel Discriminator may use a stride of 2. Alternatively, each of the filters in the previous layers of the encoder stage may operate with a stride of 4. This may enable to half the overall number of layers in the multi-channel Discriminator. The activation in the output layer may be different from the activation in the at least one of the encoder layers. The activation may be sigmoid. However, if a least squares training approach is used, sigmoid activation may not be required and is therefore optional.

While the multi-channel Discriminator may accept two or more channels as input, the single-channel Discriminator may accept only one channel as input. The architecture of the single-channel Discriminator thus slightly differs from the architecture of the multi-channel Discriminator in that the single-channel Discriminator does not include the above described prepended layer.

In general, multi-channel Discriminators are meant to assess the quality of an overall presentation (e.g., multi-channel signal) considering the spatial relationship across channels. It is not possible to consider the relationships across channels if only single-channel Discriminators are employed. Hence, in some embodiments both single-channel discriminators and a multi-channel discriminator are employed to assess the quality of both individual channels and all the channels jointly, respectively.

*Interpretation*

Unless specifically stated otherwise, as apparent from the following discussions, it is appreciated that throughout the disclosure discussions utilizing terms such as "processing", "computing", "determining", "analyzing" or the like, refer to the action and/or processes of a computer or computing system, or similar electronic computing devices, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one example embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth.

The processing system may also encompass a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one or more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code. Furthermore, a computer-readable carrier medium may form, or be included in a computer program product.

In alternative example embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a Personal Digital Assistant (PDA), a cellular telephone, a web appliance, a network router, switch or bridge, or any machine capable of executing a set of instructions (sequential or otherwise) that specify actions to be taken by that machine.

Note that the term "machine" shall also be taken to include any collection of machines that individually or jointly execute a set (or multiple sets) of instructions to perform any one or more of the methodologies discussed herein.

Thus, one example embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, example embodiments of the present disclosure may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present disclosure may take the form of a method, an entirely hardware example embodiment, an entirely software example embodiment or an example embodiment combining software and hardware aspects. Furthermore, the present disclosure may take the form of carrier medium (e.g., a computer program product on a computer-readable storage medium) carrying computer-readable program code embodied in the medium.

The software may further be transmitted or received over a network via a network interface device. While the carrier medium is in an example embodiment a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present disclosure. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media may also take the form of acoustic or light waves, such as those generated during radio wave and infrared data communications. For example, the term "carrier medium" shall accordingly be taken to include, but not be limited to, solid-state memories, a computer product embodied in optical and magnetic media; a medium bearing a propagated signal detectable by at least one processor or one or more processors and representing a set of instructions that, when executed, implement a method; and a transmission medium in a network bearing a propagated signal detectable by at least one processor of the one or more processors and representing the set of instructions.

It will be understood that the steps of methods discussed are performed in one example embodiment by an appropriate processor (or processors) of a processing (e.g., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

Reference throughout this disclosure to "one embodiment", "some embodiments" or "an example embodiment" means that a particular feature, structure or characteristic described in connection with the embodiment is included in at least one embodiment of the present disclosure. Thus, appearances of the phrases "in one embodiment", "in some embodiments" or "in an example embodiment" in various places throughout this disclosure are not necessarily all referring to the same example embodiment. Furthermore, the particular features, structures or characteristics may be combined in any suitable manner, as would be apparent to one of ordinary skill in the art from this disclosure, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the disclosure, various features of the disclosure are sometimes grouped together in a single example embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this disclosure.

Furthermore, while some example embodiments described herein include some but not other features included in other example embodiments, combinations of features of different example embodiments are meant to be within the scope of the disclosure, and form different example embodiments, as would be understood by those skilled in the art. For example, in the following claims, any of the claimed example embodiments can be used in any combination.

In the description provided herein, numerous specific details are set forth. However, it is understood that example embodiments of the disclosure may be practiced without these specific details. In other instances, well-known methods, structures and techniques have not been shown in detail in order not to obscure an understanding of this description.

Thus, while there has been described what are believed to be the best modes of the disclosure, those skilled in the art will recognize that other and further modifications may be made For example, any formulas given above are merely representative of procedures that may be used. Functionality may be added or deleted from the block diagrams and operations may be interchanged among functional blocks. Steps may be added or deleted to methods described within the scope of the present disclosure.

## Claims

1. A method of generating, in a dynamic range reduced domain, an enhanced multi-channel audio signal from an audio bitstream including a multi-channel audio signal, wherein the method includes the steps of:

   receiving the audio bitstream;
   core decoding the audio bitstream and obtaining a dynamic range reduced raw multi-channel audio signal based on the received audio bitstream, wherein the dynamic range reduced raw multi-channel audio signal comprises two or more channels;
   inputting the dynamic range reduced raw multi-channel audio signal into a multi-channel Generator for jointly processing the dynamic range reduced raw multi-channel audio signal;
   jointly enhancing the two or more channels of the dynamic range reduced raw multi-channel audio signal by the multi-channel Generator in the dynamic range reduced domain; and
   obtaining, as an output from the multi-channel Generator, an enhanced dynamic range reduced multi-channel audio signal for subsequent expansion of the dynamic range,
   wherein the enhanced dynamic range reduced multi-channel audio signal comprises two or more channels.

2. The method according to claim 1, wherein the received audio bitstream includes metadata and receiving the audio bitstream further includes demultiplexing the received audio bitstream.

3. The method according to claim 2, wherein jointly enhancing the two or more channels of the dynamic range reduced raw multi-channel audio signal by the multi-channel Generator is based on the metadata.

4. The method according to claim 3, wherein the metadata include one or more items of companding control data.

5. The method according to claim 4, wherein the companding control data include information on a companding mode among one or more companding modes that had been used for encoding the multi-channel audio signal.

6. The method according to claim 5, wherein the companding modes include the companding mode of companding on, the companding mode of companding off and the companding mode of average companding.

7. The method according to claim 5 or claim 6, wherein jointly enhancing the two or more channels of the dynamic range reduced raw multi-channel audio signal by the multi-channel Generator depends on the companding mode indicated by the companding control data.

8. The method according to claim 7 when dependent on claim 6, wherein, if the companding mode is companding off, joint enhancing by the multi-channel Generator is not performed.

9. The method according to any one of claims 1 to 8, wherein the multi-channel Generator includes an encoder stage and a decoder stage arranged in a mirror symmetric manner, wherein the encoder stage and the decoder stage each include L layers with N filters in each layer, wherein L is a natural number $\geq 1$ and wherein N is a natural number $\geq 1$, and wherein the size of the N filters in each layer of the encoder stage and the decoder stage is the same and each of the N filters in the encoder stage and the decoder stage operates with a stride of $> 1$.

10. The method according to claim 9, wherein the multi-channel Generator further includes a non-strided convolutional layer as an input layer prepending the encoder stage, and/or wherein the multi-channel Generator further includes a non-strided transposed convolutional layer as an output layer subsequently following the decoder stage.

11. A method for training a multi-channel Generator in a dynamic range reduced domain in a Generative Adversarial Network setting comprising the multi-channel Generator, a group of one or more single-channel Discriminators and a multi-channel Discriminator, wherein the method includes the steps of:

inputting a dynamic range reduced raw multi-channel audio training signal into the multi-channel Generator, wherein the dynamic range reduced raw multi-channel audio training signal comprises two or more channels; jointly generating, by the multi-channel Generator, an enhanced dynamic range reduced multi-channel audio training signal based on the dynamic range reduced raw multi-channel audio training signal; inputting, one at a time, each channel of the two or more channels of the enhanced dynamic range reduced multi-channel audio training signal and a corresponding channel of an original dynamic range reduced multi-channel audio signal, from which the dynamic range reduced raw multi-channel audio training signal has been derived, into a single-channel Discriminator out of the group of one or more single-channel Discriminators; inputting further, one at a time, the enhanced dynamic range reduced multi-channel audio training signal and the corresponding original dynamic range reduced multi-channel audio signal into the multi-channel Discriminator; judging by the single-channel Discriminator and the multi-channel Discriminator whether the input dynamic range reduced multi-channel audio signal is the enhanced dynamic range reduced multi-channel audio training signal or the original dynamic range reduced multi-channel audio signal; and tuning the parameters of the multi-channel Generator until the single-channel Discriminator and the multi-channel Discriminator can no longer distinguish the enhanced dynamic range reduced multi-channel audio training signal from the original dynamic range reduced multi-channel audio signal.

12. The method according to claim 11, wherein the group of the one or more single-channel Discriminators is chosen based on a type of the original dynamic range reduced multi-channel audio signal, and wherein the type of the original dynamic range reduced multi-channel audio signal includes a stereo type multi-channel audio signal, a 5.1 type multi-channel audio signal, a 7.1 type multi-channel audio signal or a 9.1 type multi-channel audio signal.

13. The method according to claim 11 or 12, wherein additional metadata are input into the multi-channel Generator and jointly generating, by the multi-channel Generator, the enhanced dynamic range reduced multi-channel audio training signal is additionally based on the metadata.

14. An apparatus for generating, in a dynamic range reduced domain, an enhanced multi-channel audio signal from an audio bitstream including a multi-channel audio signal, wherein the apparatus includes:

a receiver for receiving the audio bitstream; a core decoder for core decoding the audio bitstream and for obtaining a dynamic range reduced raw multi-channel audio signal based on the received audio bitstream, wherein the dynamic range reduced raw multi-channel audio signal comprises two or more channels; and

a multi-channel Generator for jointly enhancing the two or more channels of the dynamic range reduced raw multi-channel audio signal in the dynamic range reduced domain and for obtaining an enhanced dynamic range reduced multi-channel audio signal, wherein the enhanced dynamic range reduced multi-channel audio signal comprises two or more channels.

15. The apparatus according to claim 14 further including a demultiplexer for demultiplexing the received audio bitstream, wherein the received audio bitstream includes metadata.

**Patentansprüche**

1. Verfahren zum Generieren, in einer Domäne mit reduziertem Dynamikbereich, eines verbesserten Mehrkanal-Audiosignals aus einem Audio-Bitstrom, der ein Mehrkanal-Audiosignal beinhaltet, wobei das Verfahren die Schritte beinhaltet zum:

   Empfangen des Audio-Bitstroms;
   Kerndecodieren des Audio-Bitstroms und Erhalten eines rohen Mehrkanal-Audiosignals mit reduziertem Dynamikbereich basierend auf dem empfangenen Audio-Bitstrom, wobei das rohe Mehrkanal-Audiosignal mit reduziertem Dynamikbereich zwei oder mehr Kanäle umfasst;
   Eingeben des rohen Mehrkanal-Audiosignals mit reduziertem Dynamikbereich in einen Mehrkanal-Generator zum gemeinsamen Verarbeiten des rohen Mehrkanal-Audiosignals mit reduziertem Dynamikbereich;
   gemeinsames Verbessern der zwei oder mehr Kanäle des rohen Mehrkanal-Audiosignals mit reduziertem Dynamikbereich durch den Mehrkanal-Generator in der Domäne mit reduziertem Dynamikbereich; und
   Erhalten, als Ausgabe aus dem Mehrkanal-Generator, eines verbesserten Mehrkanal-Audiosignals mit reduziertem Dynamikbereich zur anschließenden Erweiterung des Dynamikbereichs, wobei das verbesserte Mehrkanal-Audiosignal mit reduziertem Dynamikbereich zwei oder mehr Kanäle umfasst.

2. Verfahren nach Anspruch 1, wobei der empfangene Audio-Bitstrom Metadaten beinhaltet und Empfangen des Audio-Bitstroms weiter das Demultiplexen des empfangenen Audio-Bitstroms beinhaltet.

3. Verfahren nach Anspruch 2, wobei das gemeinsame Verbessern der zwei oder mehr Kanäle des rohen Mehrkanal-Audiosignals mit reduziertem Dynamikbereich durch den Mehrkanal-Generator auf den Metadaten basiert.

4. Verfahren nach Anspruch 3, wobei die Metadaten ein oder mehrere Elemente von Kompandierungssteuerdaten beinhalten.

5. Verfahren nach Anspruch 4, wobei die Kompandierungssteuerdaten Informationen zu einem Kompandierungsmodus unter einem oder mehreren Kompandierungsmodi beinhalten, die zum Codieren des Mehrkanal-Audiosignals verwendet worden sind.

6. Verfahren nach Anspruch 5, wobei die Kompandierungsmodi den Kompandierungsmodus "Kompandierung ein", den Kompandierungsmodus "Kompandierung aus" und den Kompandierungsmodus "Durchschnittskompandierung" beinhalten.

7. Verfahren nach Anspruch 5 oder Anspruch 6, wobei das gemeinsame Verbessern der zwei oder mehr Kanäle des rohen Mehrkanal-Audiosignals mit reduziertem Dynamikbereich durch den Mehrkanal-Generator von dem Kompandierungsmodus abhängt, der von den Kompandierungssteuerdaten angegeben wird.

8. Verfahren nach Anspruch 7, wenn von Anspruch 6 abhängig, wobei, wenn der Kompandierungsmodus "Kompandierung aus" lautet, gemeinsames Verbessern durch den Mehrkanal-Generator nicht durchgeführt wird.

9. Verfahren nach einem der Ansprüche 1 bis 8, wobei der Mehrkanal-Generator eine Encoderstufe und eine Decoderstufe beinhaltet, die spiegelsymmetrisch angeordnet sind, wobei die Encoderstufe und die Decoderstufe jeweils L Schichten mit N Filtern in jeder Schicht beinhalten, wobei L eine natürliche Zahl $\geq 1$ ist und wobei N eine natürliche Zahl $\geq 1$ ist, und wobei die Größe der N Filter in jeder Schicht der Encoderstufe und der Decoderstufe die gleiche ist und jeder der N Filter in der Encoderstufe und der Decoderstufe mit einer Schrittweite von > 1 arbeitet.

10. Verfahren nach Anspruch 9, wobei der Mehrkanal-Generator weiter eine nicht schritt-gesteuerte Faltungsschicht als Eingangsschicht beinhaltet, die der Encoderstufe vorangestellt ist, und/oder wobei der Mehrkanal-Generator weiter eine nicht schritt-gesteuerte transponierte Faltungsschicht als Ausgangsschicht beinhaltet, die im Anschluss auf die Decoderstufe folgt.

11. Verfahren zum Trainieren eines Mehrkanal-Generators in einer Domäne mit reduziertem Dynamikbereich in einer generativen kontradiktorischen Netzwerkeinstellung, das den Mehrkanal-Generator, eine Gruppe aus einem oder mehreren Einkanal-Diskriminatoren und einen Mehrkanal-Diskriminator umfasst, wobei das Verfahren die Schritte beinhaltet zum:

Eingeben eines rohen Mehrkanal-Audio-Trainingssignals mit reduziertem Dynamikbereich in den Mehrkanal-Generator, wobei das rohe Mehrkanal-Audio-Trainingssignal mit reduziertem Dynamikbereich zwei oder mehr Kanäle umfasst;
gemeinsames Generieren, durch den Mehrkanal-Generator, eines verbesserten Mehrkanal-Audio-Trainingssignals mit reduziertem Dynamikbereich basierend auf dem rohen Mehrkanal-Audio-Trainingssignal mit reduziertem Dynamikbereich;
Eingeben, einen nach dem anderen, jedes Kanals der zwei oder mehr Kanäle des verbesserten Mehrkanal-Audio-Trainingssignals mit reduziertem Dynamikbereich und eines entsprechenden Kanals eines ursprünglichen Mehrkanal-Audiosignals mit reduziertem Dynamikbereich, aus dem das rohe Mehrkanal-Audio-Trainingssignal mit reduziertem Dynamikbereich abgeleitet wurde, in einen Einkanal-Diskriminator aus der Gruppe aus einem oder mehreren Einkanal-Diskriminatoren;
weiter Eingeben, einen nach dem anderen, des verbesserten Mehrkanal-Audio-Trainingssignals mit reduziertem Dynamikbereich und des entsprechenden ursprünglichen Mehrkanal-Audiosignals mit reduziertem Dynamikbereich in den Mehrkanal-Diskriminator;
Beurteilen, durch den Einkanal-Diskriminator und den Mehrkanal-Diskriminator, ob das eingegebene Mehrkanal-Audiosignal mit reduziertem Dynamikbereich das verbesserte Mehrkanal-Audio-Trainingssignal mit reduziertem Dynamikbereich oder das ursprüngliche Mehrkanal-Audiosignal mit reduziertem Dynamikbereich ist; und
Feinabstimmen der Parameter des Mehrkanal-Generators, bis der Einkanal-Diskriminator und der Mehrkanal-Diskriminator das verbesserte Mehrkanal-Audio-Trainingssignal mit reduziertem Dynamikbereich nicht mehr von dem ursprünglichen Mehrkanal-Audiosignal mit reduziertem Dynamikbereich unterscheiden können.

12. Verfahren nach Anspruch 11, wobei die Gruppe des einen oder mehrerer Einkanal-Diskriminatoren basierend auf einem Typ des ursprünglichen Mehrkanal-Audiosignals mit reduziertem Dynamikbereich ausgewählt wird, und wobei der Typ des ursprünglichen Mehrkanal-Audiosignals mit reduziertem Dynamikbereich ein Mehrkanal-Audiosignal vom Stereotyp, ein Mehrkanal-Audiosignal vom Typ 5.1, ein Mehrkanal-Audiosignal vom Typ 7.1 oder ein Mehrkanal-Audiosignal vom Typ 9.1 beinhaltet.

13. Verfahren nach Anspruch 11 oder 12, wobei zusätzliche Metadaten in den Mehrkanal-Generator eingegeben werden und das gemeinsame Generieren des verbesserten Mehrkanal-Audio-Trainingssignals mit reduziertem Dynamikbereich durch den Mehrkanal-Generator zusätzlich auf den Metadaten basiert.

14. Einrichtung zum Generieren, in einer Domäne mit reduziertem Dynamikbereich, eines verbesserten Mehrkanal-Audiosignals aus einem Audio-Bitstrom, der ein Mehrkanal-Audiosignal beinhaltet, wobei die Einrichtung beinhaltet:

einen Empfänger zum Empfangen des Audio-Bitstroms;
einen Kerndecoder zum Kerndecodieren des Audio-Bitstroms und zum Erhalten eines rohen Mehrkanal-Audiosignals mit reduziertem Dynamikbereich basierend auf dem empfangenen Audio-Bitstrom, wobei das rohe Mehrkanal-Audiosignal mit reduziertem Dynamikbereich zwei oder mehr Kanäle umfasst; und
einen Mehrkanal-Generator zum gemeinsamen Verbessern der zwei oder mehr Kanäle des rohen Mehrkanal-Audiosignals mit reduziertem Dynamikbereich in der Domäne mit reduziertem Dynamikbereich, und zum Erhalten eines verbesserten Mehrkanal-Audiosignals mit reduziertem Dynamikbereich, wobei das verbesserte Mehrkanal-Audiosignal mit reduziertem Dynamikbereich zwei oder mehr Kanäle umfasst.

15. Einrichtung nach Anspruch 14, die weiter einen Demultiplexer zum Demultiplexen des empfangenen Audio-Bitstroms beinhaltet, wobei der empfangene Audio-Bitstrom Metadaten beinhaltet.

**Revendications**

1. Procédé de génération, dans un domaine à plage dynamique réduite, d'un signal audio multicanal amélioré à partir d'un train de bits audio incluant un signal audio multicanal, dans lequel le procédé inclut les étapes suivantes :

   la réception du train de bits audio ;
   le décodage de base du train de bits audio et l'obtention d'un signal audio multicanal brut à plage dynamique réduite sur la base du train de bits audio reçu, dans lequel le signal audio multicanal brut à plage dynamique réduite comprend deux canaux ou plus ;
   l'entrée du signal audio multicanal brut à plage dynamique réduite dans un générateur multicanal pour traiter conjointement le signal audio multicanal brut à plage dynamique réduite ;
   l'amélioration conjointe des deux canaux ou plus du signal audio multicanal brut à plage dynamique réduite par le générateur multicanal dans le domaine à plage dynamique réduite ; et
   l'obtention, en tant que sortie du générateur multicanal, d'un signal audio multicanal amélioré à plage dynamique réduite pour une extension ultérieure de la plage dynamique, dans lequel le signal audio multicanal amélioré à plage dynamique réduite comprend deux canaux ou plus.

2. Procédé selon la revendication 1, dans lequel le train de bits audio reçu inclut des métadonnées et la réception du train de bits audio inclut en outre le démultiplexage du train de bits audio reçu.

3. Procédé selon la revendication 2, dans lequel l'amélioration conjointe des deux canaux ou plus du signal audio multicanal brut à plage dynamique réduite par le générateur multicanal est basée sur les métadonnées.

4. Procédé selon la revendication 3, dans lequel les métadonnées incluent un ou plusieurs éléments de données de commande de compression-extension.

5. Procédé selon la revendication 4, dans lequel les données de commande de compression-extension incluent des informations sur un mode de compression-extension parmi un ou plusieurs modes de compression-extension qui ont été utilisés pour coder le signal audio multicanal.

6. Procédé selon la revendication 5, dans lequel les modes de compression-extension incluent le mode de compression-extension de type compression-extension activée, le mode de compression-extension de type compression-extension désactivée et le mode de compression-extension de type compression-extension moyenne.

7. Procédé selon la revendication 5 ou la revendication 6, dans lequel l'amélioration conjointe des deux canaux ou plus du signal audio multicanal brut à plage dynamique réduite par le générateur multicanal dépend du mode de compression-extension indiqué par les données de commande de compression-extension.

8. Procédé selon la revendication 7 lorsqu'elle dépend de la revendication 6, dans lequel, si le mode de compression-extension est du type compression-extension désactivée, l'amélioration conjointe par le générateur multicanal n'est pas effectuée.

9. Procédé selon l'une quelconque des revendications 1 à 8, dans lequel le générateur multicanal inclut un étage codeur et un étage décodeur agencés de manière symétrique en miroir, dans lequel l'étage codeur et l'étage décodeur incluent chacun L couches avec N filtres dans chaque couche, dans lequel L est un nombre entier naturel $\geq 1$ et dans lequel N est un nombre entier naturel $\geq 1$, et dans lequel la taille des N filtres dans chaque couche de l'étage codeur et de l'étage décodeur est la même et chacun des N filtres dans l'étage codeur et l'étage décodeur fonctionne avec une progression > 1.

10. Procédé selon la revendication 9, dans lequel le générateur multicanal inclut en outre une couche convolutionnelle non progressive en tant que couche d'entrée précédant l'étage de codeur et/ou dans lequel le générateur multicanal inclut en outre une couche convolutionnelle transposée non progressive en tant que couche de sortie suivant ultérieurement l'étage décodeur.

11. Procédé de formation d'un générateur multicanal dans un domaine à plage dynamique réduite dans un réglage de réseau antagoniste génératif comprenant le générateur multicanal, un groupe d'un ou plusieurs discriminateurs monocanal et un discriminateur multicanal, dans lequel le procédé inclut les étapes suivantes :

l'entrée d'un signal de formation audio multicanal brut à plage dynamique réduite dans le générateur multicanal, dans lequel le signal de formation audio multicanal brut à plage dynamique réduite comprend deux canaux ou plus ;

la génération conjointe, par le générateur multicanal, d'un signal de formation audio multicanal amélioré à plage dynamique réduite sur la base du signal de formation audio multicanal brut à plage dynamique réduite ;

l'entrée, un à la fois, de chaque canal des deux canaux ou plus du signal de formation audio multicanal amélioré à plage dynamique réduite et d'un canal correspondant d'un signal audio multicanal à plage dynamique réduite d'origine, à partir duquel le signal de formation audio multicanal brut à plage dynamique réduite a été dérivé, dans un discriminateur monocanal parmi le groupe d'un ou plusieurs discriminateurs monocanal ;

l'entrée en outre, un à la fois, du signal de formation audio multicanal amélioré à plage dynamique réduite et du signal audio multicanal à plage dynamique réduite d'origine correspondant dans le discriminateur multicanal ;

l'évaluation, par le discriminateur monocanal et le discriminateur multicanal, pour savoir si le signal audio multicanal à plage dynamique réduite entré est le signal de formation audio multicanal amélioré à plage dynamique réduite ou le signal audio multicanal à plage dynamique réduite d'origine ; et

l'ajustement des paramètres du générateur multicanal jusqu'à ce que le discriminateur monocanal et le discriminateur multicanal ne puissent plus distinguer le signal de formation audio multicanal amélioré à plage dynamique réduite du signal audio multicanal à plage dynamique réduite d'origine.

12. Procédé selon la revendication 11, dans lequel le groupe des un ou plusieurs discriminateurs monocanal est choisi sur la base d'un type du signal audio multicanal à plage dynamique réduite d'origine, et dans lequel le type de signal audio multicanal à plage dynamique réduite d'origine inclut un signal audio multicanal de type stéréo, un signal audio multicanal de type 5.1, un signal audio multicanal de type 7.1 ou un signal audio multicanal de type 9.1.

13. Procédé selon la revendication 11 ou 12, dans lequel des métadonnées supplémentaires sont entrées dans le générateur multicanal et la génération conjointe, par le générateur multicanal, du signal de formation audio multicanal amélioré à plage dynamique réduite est en outre basée sur les métadonnées.

14. Appareil permettant de générer, dans un domaine à plage dynamique réduite, un signal audio multicanal amélioré à partir d'un train de bits audio incluant un signal audio multicanal, dans lequel l'appareil inclut :

un récepteur pour recevoir le train de bits audio ;

un décodeur de base pour décoder de manière basique le train de bits audio et pour obtenir un signal audio multicanal brut à plage dynamique réduite sur la base du train de bits audio reçu, dans lequel le signal audio multicanal brut à plage dynamique réduite comprend deux canaux ou plus ; et

un générateur multicanal pour améliorer conjointement les deux canaux ou plus du signal audio multicanal brut à plage dynamique réduite dans le domaine à plage dynamique réduite et pour obtenir un signal audio multicanal amélioré à plage dynamique réduite, dans lequel le signal audio multicanal amélioré à plage dynamique réduite comprend deux canaux ou plus.

15. Appareil selon la revendication 14 incluant en outre un démultiplexeur pour démultiplexer le train de bits audio reçu, dans lequel le train de bits audio reçu inclut des métadonnées.

FIG. 1

FIG. 2

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63018282
- EP 20175654
- US 9947335 B2

**Non-patent literature cited in the description**

- **C. UHLE et al.** Methods for Low Bitrate Coding Enhancement Part II: Spatial Enhancement. *AES International Conference on Automotive Audio*, 2017
- **D. MICHELSANTI** ; **Z.-H. TAN**. Conditional Generative Adversarial Networks for Speech Enhancement and Noise-Robust Speaker Verification. *INTERSPEECH*, 2017
- **N. TAWARA** ; **T. KOBAYASHI** ; **T. OGAWA**. Multi-channel Speech Enhancement Using Time-Domain Convolutional Denoising Autoencoder. *INTERSPEECH*, 2019
- **A. BISWAS et al.** *Audio Codec Enhancement with Generative Adversarial Networks*